# EUROPÄISCHE PATENTSCHRIFT

(11) **EP 2 281 123 B1**
(45) Veröffentlichungstag und Bekanntmachung des Hinweises auf die Patenterteilung: **02.10.2013**
(21) Anmeldenummer: 09745454.0
(22) Anmeldetag: 15.05.2009
(51) Int. Cl.: F16C 3/035, F16D 3/06

(54) **VERSCHIEBEEINHEIT**
DISPLACEMENT UNIT
UNITÉ DE DÉPLACEMENT

(30) Priorität: 15.05.2008 DE 102008023655
(43) Veröffentlichungstag der Anmeldung: 09.02.2011
(73) Patentinhaber: Neumayer Tekfor Holding GMBH, 77756 Hausach (DE)
(72) Erfinder: LEHMANN, Martin, 78132 Hornberg (DE)
(86) Internationale Anmeldenummer: PCT/DE2009/000669
(87) Internationale Veröffentlichungsnummer: WO 2009/138070

(56) Entgegenhaltungen:
- EP-A- 1 566 324
- EP-A- 1 588 921
- DE-A1- 3 730 393
- DE-A1- 19 952 245
- US-B1- 6 193 612

## Beschreibung

Die Erfindung betrifft eine Verschiebeeinheit zur axial begrenzten Verlagerung zumindest zweier aufeinander gelagerter Antriebsbauteile einer Antriebswelle mit zwei aufeinander gelagerten Antriebsbauteilen. Dabei ist ein Antriebsbauteil, das durch eine Profilhülse gebildet ist, mit an dessen Innenumfang über den Umfang verteilten, längs des Antriebsbauteils parallel zueinander verlaufenden Wälzkörperlaufbahnen gebildet. Das weitere Antriebsbauteil, das durch einen Profilzapfen gebildet ist, ist mit am Außenumfang über den Umfang verteilten, längs des Antriebsbauteils parallel zueinander verlaufenden Wälzkörperlaufbahnen gebildet. Dabei sind jeweils mehrere axial beabstandete Wälzkörper in jeder der Wälzkörperlaufbahnen untergebracht sind. Weiterhin ist zwischen zumindest zwei Wälzkörperlaufbahnen eine Profilnut mit zur Profiltiefe der Wälzkörperlaufbahnen unterschiedlicher Profiltiefe eingebracht.

Derartige Verschiebeeinheiten sind insbesondere aus Antriebssträngen von Kraftfahrzeugen bekannt, in denen beispielsweise Seitenwellen und/oder Längswellen zum Längenausgleich zwischen Getriebe und Fahrwerk mit Verschiebeeinheiten ausgestattet werden. Gattungsgemäße Verschiebeeinheiten zeigen beispielsweise die Offenlegungsschriften EP 1 566 324 A1 und EP 1 588 921 A1.

Verschiebeeinheiten sind beispielsweise aus Antriebsbauteilen wie einer Profilhülse und einem in dieser angeordneten und axial begrenzt verschiebbaren Profilzapfen aufgenommen, so dass ein Längenausgleich durch eine axiale Verlagerung dieser gegeneinander erfolgen kann. Dabei sind Profilhülse und Profilzapfen aufeinander kugelgelagert. Hierzu sind in der Profilhülse, und in den Profilzapfen längs der Drehachse der Verschiebeeinheit parallel zueinander verlaufende Kugellaufbahnen vorgesehen, in denen in einem Kugelkäfig untergebrachte, axial zueinander beabstandete und über den Umfang an die Teilung der Kugellaufbahnen angepasste Kugeln angeordnet sind, die sich in den Kugellaufbahnen abwälzen und über die Schultern der Kugellaufbahnen das an den Antriebsbauteilen anliegende Drehmoment übertragen. Solche Verschiebeeinheiten sind beispielsweise durch die DE 199 52 245 A1 und die DE 101 23 221 C1 bekannt geworden. Die Verwendung von Laufbahnen bei Verbindungselementen von Wellenteilen ist beschrieben in der DE 37 30 393 A1 oder der US 2,979,17.

Aufgabe der Erfindung ist die Verbesserung von Verschiebeeinheiten insbesondere für Antriebsstränge in Kraftfahrzeugen in Hinsicht auf eine Gewichts- und/oder Kostenreduzierung, Montageerleichterung, eine hohe Funktionssicherheit zu gewährleisten und die Nachteile des Standes der Technik zu vermeiden.

Die Aufgabe wird durch eine Verschiebeeinheit zur axial begrenzten Verlagerung zumindest zweier aufeinander gelagerter Antriebsbauteile gelöst, wobei die Profilnut im Querschnitt aus zwei zueinander beabstandeten Kreissegmenten gebildet ist, welche eine Erhebung bilden und wobei die Mittelpunkte der die Kreissegmente bildenden Kreise auf einem Umfang mit größerem Radius als der Innenumfang der Profilhülse beziehungsweise auf einem Umfang mit kleinerem Radius als der Außenumfang des Profilzapfens angeordnet sind. Für bestimmte Anwendungsfälle kann es dabei von Vorteil sein, wenn die Profilnut mit kleinerer Profiltiefe als die Profiltiefe der Wälzkörperlaufbahnen versehen ist. Dabei kann die Profilnut mittels einer Abbildung einer Werkzeugkontur hergestellt sein. Die Querschnitte der Profilnuten sind aus zwei zueinander beabstandeten Kreissegmenten gebildet, so dass sich ein Querschnitt mit jeweils kreisförmigem Profil in Nachbarschaft zu den Wälzkörperquerschnitten ergibt, der in der Mitte je nach Überlappung der Kreissegmente eine Erhebung bildet. Es hat sich dabei als vorteilhaft gezeigt, wenn die Mittelpunkte der die Kreissegmente bildenden Kreise auf einem Umfang mit größerem Radius als der Innenumfang der Profilhülse beziehungsweise auf einem Umfang mit kleinerem Radius als der Außenumfang des Profilzapfens angeordnet sind. Die Ausgestaltung der Erhebung ergibt sich dabei aus dem Abstand der Mittelpunkte der den Querschnitt bildenden Kreise, indem sich deren Umfänge überschneiden oder gegebenenfalls nur berühren oder sogar einen Abstand zueinander aufweisen. An der Grenzfläche zu den Wälzkörperlaufbahnquerschnitten können die Kreissegmente zur Erzielung einer größeren Materialanhäufung und damit einer Höheren Tragfähigkeit der Schultern der Wälzkörperlaufbahnen angeschnitten sein.

Unter Wälzkörpern sind bevorzugt Kugeln zu verstehen, so dass die Wälzkörperlaufbahnen als Kugellaufbahnen dargestellt werden, in denen die Kugeln im Wesentlichen ohne Spiel abwälzen. In besonderen Ausführungsbeispielen können die Wälzkörper tonnen-, nadel- oder kugelscheibenförmig ausgestaltet sein, wobei die Wälzkörperlaufbahnen diesen Profilen entsprechend angeordnet werden.

Im einfachsten Fall sind mehrere, beispielsweise drei bis zwölf, vorzugsweise sechs oder acht über den Umfang der Antriebsbauteile verteilte Wälzkörperlaufbahnen vorgesehen, die parallel zueinander längs der Drehachse der Antriebsbauteile in diese eingebracht sind. Vorteilhaft ist eine lineare Anordnung längs der Drehachse.

Für Anwendungen mit besonderen Anforderungen kann auch vorgesehen sein, die Wälzkörperlaufbahnen mit einem geringen Umfangsanteil beispielsweise in Form von gegenüber der Drehachse verdrehten Zügen vorzusehen, so dass unter Drehmomentbelastung der Verschiebeeinheit die beiden Antriebsbauteile zumindest geringfügig axial beispielsweise gegeneinander verlagert werden, wobei die Verlagerung durch einen oder mehrere Anschläge begrenzt sein kann.

In vorteilhafter Weise werden über den Umfang betrachtet mehrere Profilnuten zwischen Wälzkörperlaufbahnen eingebracht. Besonders vorteilhaft ist das Einbringen jeweils zumindest einer Profilnut zwischen alle Wälzkörperlaufbahnen, so dass sich Profilnuten und Wälzkörperlaufbahnen kontinuierlich abwechseln. Dabei können Profilnuten an beiden Antriebsbauteilen vorgesehen sein, wobei sich das Einbringen von Profilnuten insbesondere in der Profilhülse als vorteilhaft erwiesen hat. Insbesondere durch den größeren Außendurchmesser der Profilhülse wird der ggf. höhere Aufwand des Einbringens von Profilnuten durch eine effektive Gewichtsersparnis überkompensiert. Durch die wechselseitige Anordnung von Profilnuten und Wälzkörperlaufbahnen kann eine Anordnung geschaffen werden, die bezüglich ihrer Materialersparnis einer Anordnung mehrerer als der erforderlichen Menge von Wälzkörperlaufbahnen entspricht, so dass die Anzahl der Wälzkörperlaufbahnen im betroffenen Antriebsbauteil, beispielsweise der Profilhülse, auf die Anzahl der Wälzkörperlaufbahnen des korrespondierenden Antriebsbauteils begrenzt werden kann. Die Gestalt, insbesondere die Profiltiefe der Profilnut beziehungsweise Profilnuten ist dabei geringer als die Profiltiefe der Wälzkörperlaufbahnen, so dass während der Montage der Antriebsbauteile aufeinander eine Fehlpositionierung auf den Wälzkörperlaufbahnen eines Antriebsbauteils auf die Protilnuten des anderen Antriebsbauteils in sicherer Weise vermieden wird, die infolge der beispielsweise auf eine Gewichtsersparnis optimierten Oberfläche der Profilnut eine gravierende Fehlfunktion zur Folge hätte.

In einem vorteilhaften Ausführungsbeispiel kann eine Teilung der Antriebsbauteile über den Umfang vorgesehen sein, die dieselben Winkelsegmente für Profilnuten und Wälzkörperlaufbahnen vorsieht. Wird nur ein Antriebsbauteil und/oder nur ein Teil der Zwischenräume zwischen den Wälzkörperlaufbahnen mit Profilnuten versehen, können diese Winkelsegmente dem Außen- beziehungsweise Innenumfang des entsprechenden Antriebsbauteils entsprechen oder Übergänge wie Rundungen oder Fasen zu den benachbarten Wälzkörperlaufbahnen bilden. Die vorgeschlagene Teilung ist insbesondere für einen homogenen Hersteltungsprozess der Antriebsbauteile und hier insbesondere für die Profilhülse vorteilhaft. Entsprechend einem besonders vorteilhaften Verfahren wird diese vorzugsweise mittels eines Rundknetverfahrens, vorzugsweise mittels eines Formrundknetverfahrens zur gleichzeitigen, werkzeugfallenden Einbringung der Wälzkörperflächen und/oder der Profilnuten aus einem Rohrmaterial hergestellt. Die Antriebsbauteile werden nach deren Fertigbearbeitung gehärtet, vorteilhafterweise einsatzgehärtet.

In vorteilhafter Weise ist die Breite der Querschnitte der Profilnuten am Außenumfang des Profilzapfens beziehungsweise am Innenumfang der Profilhülse größer als die Breite des Querschnitts einer benachbarten Wälzkörperlaufbahn. Auf diese Weise kann infolge der geringeren Profiltiefe der Profilnuten eine erhöhte Materialanhäufung an der Schulter der Wälzkörperlaufbahn als bei einer als Profilnut ausgestalteten gleichen oder bezüglich ihres Durchmessers geringfügig vergrößerten Wälzkörperlaufbahn erzielt werden. Dabei ist die Fläche einer derartigen Querschnittsfläche der Profilnut größer als die Querschnittsfläche der benachbarten Wälzkörperlaufbahn, so dass in besonders effektiver Weise die Tragkraft der Wälzkörperlaufbahnen zur Übertragung von Drehmoment in Umfangsrichtung durch erhöhte Materialanhäufung an deren Schultern bei verringertem Gewicht der Antriebsbauteile erzielt werden kann. Eine Ausgestaltung sieht vor, dass die Querschnittsfläche der Profilnut in Abhängigkeit von der Dicke einer oberflächengehärteten Schicht des Antriebsbauteils ausgestaltet ist. Um das Gewicht möglichst stark herabzusetzen, wird dabei die Querschnittsfläche in Abhängigkeit von Parametern wie beispielsweise der Tiefe, bis zu welcher das Antriebsbauteil gehärtet ist, möglichst groß gewählt.

Eine Ausgestaltung beinhaltet, dass die Querschnittsfläche der Profilnut derartig ausgestaltet ist, dass ein Druckkegel eines Wälzkörpers in einer zur Profilnut benachbarten Wälzkörperlaufbahn im Wesentlichen außerhalb der Querschnittsfläche verläuft. Die Querschnittsfläche wird in dieser Ausgestaltung derartig vorgegeben, dass der Druckkegel eines Wälzkörpers in einer benachbarten Wälzkörperlaufbahn im Wesentlichen außerhalb der Querschnittsfläche verläuft. Dies bezieht sich somit auf die zu erwartenden Kräfte. In dieser Ausgestaltung wird somit insbesondere darauf Rücksicht genommen, dass bei einer möglichst großen Querschnittsfläche der Profilnut eine ausreichende Stabilität erhalten bleibt und dass das Antriebsbauteil insbesondere während der Anwendung durch die Wälzkörper nicht verformt oder deformiert wird. Der Druckkegel wird dabei in einer Ausgestaltung über einen Kegel mit im Wesentlichen elliptischen Querschnitt und einem Öffnungswinkel zwischen 35° und 50°, insbesondere 40° oder 45° angenähert, wobei der Kegel ausgehend vom Auflagebereich eines entsprechenden Wälzkörpers in der zugeordneten Laufbahn.

Eine Ausgestaltung sieht vor, dass sich zwischen der Profilnut und der benachbarten Wälzkörperlaufbahn eine Schulter befindet, und dass die Profilnut und/oder die Schulter in Abhängigkeit von dem in der Wälzkörperlaufbahn befindlichen Wälzkörper und/oder von der Auflagefläche des Wälzkörpers in der Wälzkörperlaufbahn und/oder von dem Auflagewinkel des Wälzkörpers in der Wälzkörperlaufbahn und/oder vom vom Wälzkörper erzeugten Druckkegel ausgestaltet sind/ist. Die Profilnut bzw. die Schulter und/oder insbesondere die Wälzkörperlaufbahn werden in einer Ausgestaltung derartig ausgestaltet, dass die Schulter einer Kraft, welche der Wälzkörper insbesondere in Richtung der Schulter ausübt, widersteht und dass es insbesondere nicht zu Verformungen der Schulter durch den Wälzkörper kommt. Die Schulter ist insbesondere derartig zu konstruieren, dass auch Fertigungstoleranzen damit ausgeglichen werden können. Weiterhin kann eine Schulter in einer Ausgestaltung auch den Zweck erfüllen, der Auflage eines Werkzeugs zur Erzeugung der Innenstruktur aus Wälzkörperlaufbahn und der Profilnut zu dienen.

Eine Ausgestaltung beinhaltet, dass mindestens eine Wälzkörperlaufbahn derartig ausgestaltet ist, dass eine Schmiegung des Wälzkörpers in der Wälzkörperlaufbahn entsteht.

Eine Ausgestaltung sieht vor, dass mindestens eine Wälzkörperlaufbahn derartig ausgestaltet ist, dass ein Wälzkörper in der Wälzkörperlaufbahn die Wälzkörperlaufbahn in einem Winkel zur Mittenachse der Querschnittsfläche der Wälzlagerlaufbahn von im Wesentlichen 45° berührt. Diese Ausgestaltung bezieht sich insbesondere, aber nicht ausschließlich auf die vorhergehende Ausgestaltung mit der Schmiegung.

Eine Ausgestaltung beinhaltet, dass mindestens eine Wälzkörperlaufbahn derartig ausgestaltet ist, dass die Querschnittsfläche der Wälzkörperlaufbahn im Wesentlichen aus zwei Halbkreisflächen besteht, deren Zentren zur Mittenachse der Querschnittsfläche der Wälzlagerlaufbahn versetzt sind.

Eine Ausgestaltung sieht vor, dass mindestens zwei Profilnuten eingebracht sind. Durch eine höhere Anzahl von Profilnuten lässt sich das Gewicht weiter herabsetzen. Dabei ist in einer Ausgestaltung zwischen allen Wälzlagerlaufbahnen zumindest eine Profilnut eingebracht.

Eine Ausgestaltung beinhaltet, dass die Querschnittsflächen der mindestens zwei Profilnuten im Wesentlichen identisch ausgestaltet sind. In dieser Ausgestaltung sind zumindest zwei Profilnuten in ihrem Querschnitt im Wesentlichen identisch ausgestaltet. In weiteren Ausgestaltungen sind bei größeren Anzahlen an Profilnuten auch größere Gruppen von Profilnuten bezüglich ihrer Querschnittflächen im Wesentlichen identisch ausgestaltet. In einer weiteren Ausgestaltung sind alle Profilnuten derartig ausgestaltet, dass sie über die gleiche Querschnittsfläche verfügen.

Eine Ausgestaltung sieht vor, dass die Querschnittsflächen der mindestens zwei Profilnuten unterschiedlich zueinander ausgestaltet sind. In dieser Ausgestaltung weisen die einzelnen Profilnuten unterschiedliche Querschnittsflächen auf.

Eine Ausgestaltung sieht vor, dass die Wälzkörper gemeinsam in einem Wälzkörperkäfig angeordnet bzw. geführt oder gehalten sind.

Besonders vorteilhaft ist die Verwendung der vorgeschlagenen Verschiebeeinheit in einer Antriebswelle insbesondere im Antriebsstrang eines Kraftfahrzeugs als Seitenwelle zum Antrieb eines Antriebsrads und/oder als Kardanwelle zum Antrieb eines Getriebes oder eines Differentials, das die Antriebskräfte auf zumindest zwei Antriebsräder verteilt. Hierzu können entsprechende Antriebswellen jeweils ein an den Enden angeordnetes, einen Verschwenkwinkel ausgleichendes Gelenk, beispielsweise ein Gegenbahngleichlaufgelenk und zumindest eine dazwischen angeordnete Verschiebeeinheit wie vorgeschlagen enthalten. Es versteht sich, dass die Wellen auch aus mehreren, beispielsweise zwei Wellenabschnitten gebildet sein können, die an einer gehäusefesten Aufhängung miteinander verbunden sind, wobei zumindest einer der Wellenabschnitte über eine erfindungsgemäße Verschiebeeinheit verfügt.

In einer Ausgestaltung ist vorgesehen, dass ein Antriebsbauteil hülsenförmig ausgestaltet ist, das andere Antriebsbauteil zumindest teilweise axial in sich aufnimmt und das hülsenförmige Antriebsbauteil eine nicht runde Außenkontur aufweist. Dabei kann eine entsprechende Außenkontur durch zumindest eine am Außenumfang des hülsenförmigen Bauteils vorhandene Erhebung und/oder Einsenkung gebildet sein. In bevorzugter Weise sind diese radialen Erhebungen durch am Innenumfang des hülsenförmigen Antriebsbauteils über den Umfang verteilte, längs des Antriebsbauteils parallel zueinander verlaufende Wälzkörpedaufbahnen gebildet. Beispielsweise können die radialen Erhebungen durch Materialverdrängung bei der Ausbildung der Wälzkörperlaufbahnen während der Herstellung beispielsweise mittels eines Fließpressverfahrens oder Rundknetverfahrens gebildet werden.

Dabei hat sich als vorteilhaft erwiesen, wenn eine Materialstärke des Antriebsbauteils an der zumindest einen Erhebung, beispielsweise an deren maximaler radialer Ausdehnung, und radial außerhalb der Profilnut, beispielsweise an deren maximaler radialer Ausdehnung, im Wesentlichen gleich ist. Weiterhin kann vorteilhaft sein, wenn eine Profiltiefe der Profilnut kleiner als eine Profiltiefe der Wälzkörperlaufbahnen und die Maxima der Profiltiefen im Wesentlichen auf demselben Umfang angeordnet sind.

In einer Ausgestaltung ist vorgesehen, dass die Wälzkörper in einem Wälzkörperkäfig angeordnet sind. Die Wälzkörper sind somit in einem Käfig gehalten bzw. geführt.

Die Erfindung wird anhand von in den Figuren 1 bis 7 dargestellten Ausführungsbeispielen näher erläutert. Dabei zeigen:
- Figur 1: eine Verschiebeeinheit im Längsschnitt,
- Figur 2: die in Figur 1 dargestellte Verschiebeeinheit im Querschnitt,
- Figur 3: eine erfindungsgemäße Ausführungsform einer Profilhülse im Querschnitt,
- Figur 4: ein Detail der Profilhülse der Figur 3,
- Figur 5: eine Antriebswelle mit der Verschiebeeinheit der Figuren 1 bis 4,
- Figur 6: eine Antriebswelle mit zwei Verschiebeeinheiten der Figuren 1 bis 4 und
- Figur 7: eine den Figuren 1 bis 4 ähnliche Verschiebeeinheit.

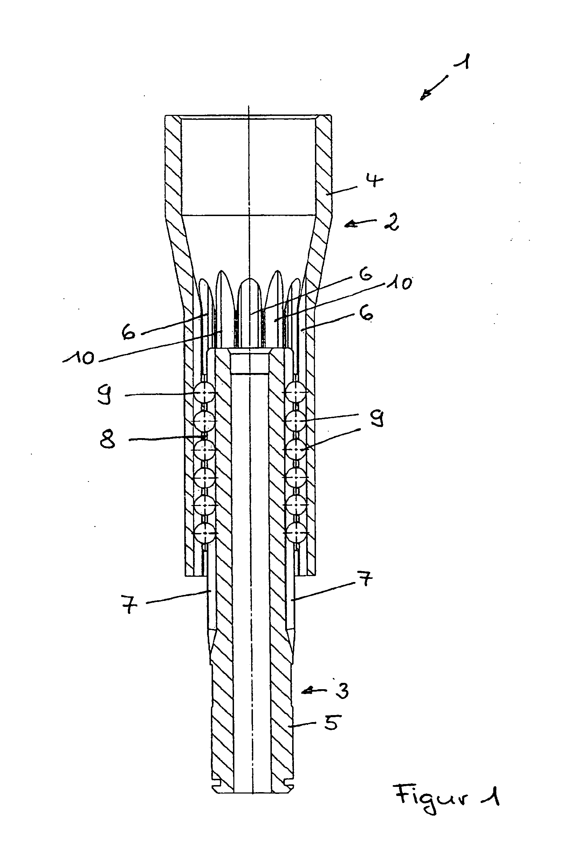

Figur 1 zeigt eine Verschiebeeinheit 1 mit zwei aufeinander axial verschiebbar gelagerten Antriebsbauteilen 2 und 3. Antriebsbauteil 2 ist aus einer Profilhülse 4 gebildet, die in sich das Antriebsbauteil 3 aufnimmt, das als Profilzapfen 5, der mit einer zentrierten Hohlbohrung versehen sein kann, ausgebildet ist. Profilhülse 4 und Profilzapfen 5 weisen in Anzahl und Orientierung zueinander komplementäre, über den Umfang verteilte, als Kugellaufbahnen ausgebildete Wälzkörperlaufbahnen 6, 7 auf, in denen jeweils zueinander axial beabstandete und in einem Wälzkörperkäfig 8 aufgenommene, als Kugeln ausgebildete Wälzkörper 9 aufgenommen sind. Durch die Aufnahme der Wälzkörper 9 praktisch ohne Spiel in den Wälzkörperlaufbahnen 6, 7 wälzen die Wälzkörper 9 in diesen während einer axialen Verschiebung der Antriebsbauteile 2, 3 ab und ermöglichen eine reibungsarme Verlagerung. Desweiteren erfolgt eine Drehmomentübertragung von einem Antriebsbauteil 2, 3 auf das andere über die zwischen den Wälzkörperlaufbahnen 6, 7 vorgesehenen Wälzkörper 9, die entgegen der dargestellten Kugelform auch andere Formen, beispielsweise Kugelscheiben-, Nadel- oder Tonnenform aufweisen können.

Über den Umfang im Wechsel zu den Wälzkörperlaufbahnen 6 sind Profilnuten 10 vorgesehen. Wälzkörperlaufbahnen 6 und/oder Profilnuten 10 sind vorzugsweise mittels eines Formrundknetverfahrens oder eines anderen Umformverfahrens oder auch spanend eingebracht. In dem gezeigten Ausführungsbeispiel ist die Profilhülse 4 an ihrer Endseite radial zur formschlüssigen Aufnahme an einem weiteren Antriebselement, beispielsweise einem Anschlussstück einer Antriebswelle oder einem Gelenk, aufgeweitet. An der gegenüber liegenden Seite der Verschiebeeinheit 1 weist der Profilzapfen 5 ein nicht näher dargestelltes Außenprofil zur formschlüssigen Aufnahme an einem weiteren Antriebselement auf.

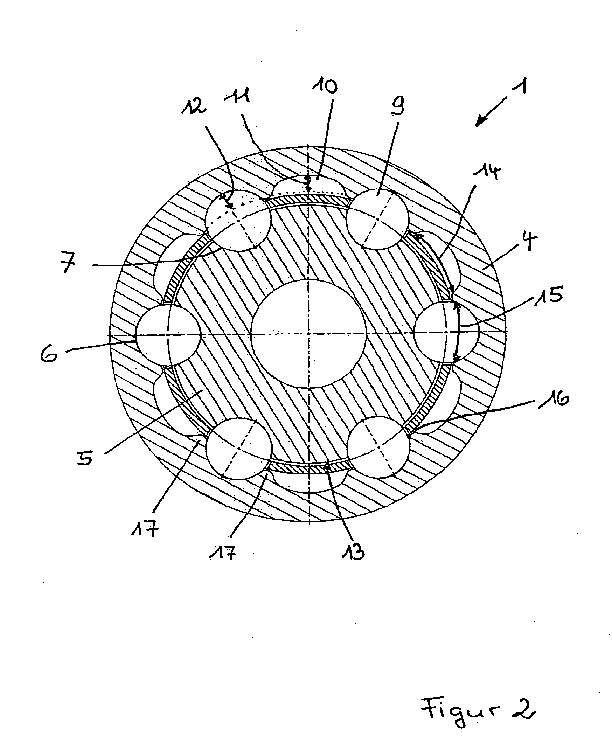

Figur 2 zeigt die Verschiebeeinheit 1 der Figur 1 im Querschnitt. In dem gezeigten Ausführungsbeispiel sind jeweils in gleicher Anzahl - hier sechs - im Profilzapfen 5 und in der Profilhülse 4 zur Aufnahme der kugelförmigen Wälzkörper 9 im Querschnitt kreissegmentförmige Wälzkörperlaufbahnen 6, 7 eingebracht Der Außenumfang des Profilzapfens 5 weist im gezeigten Ausführungsbeispiel über den Umfang betrachtet zwischen den Wälzkörperlaufbahnen 7 keine Einzüge auf. In weiteren Ausführungsbeispielen kann dieser auch eine Außenkontur, beispielsweise in Form einer oder mehrerer über den Umfang verteilter und gegebenenfalls mit den Wälzkörperlaufbahnen abwechselnden Profilnuten, aufweisen, die insbesondere durch eine Werkzeugkontur in den Profilzapfen eingebracht, beispielsweise eingeprägt oder spanabhebend eingebracht werden. Die Profilhülse 4 hingegen weist über den Umfang abwechselnd mit den Wälzkörperlaufbahnen 6 Profilnuten 10 auf, deren Profiltiefe 11 kleiner als die Profiltiefe 12 der Wälzkörperlaufbahnen 6 ist. Auf diese Weise wird eine Fehlmontage, bei der die Wälzkörper 9 in die Profilnuten 10 eingebracht werden, unmöglich. Weiterhin wird die Materialstärke im Bereich der größten Profiltiefe 11 der Profilnuten 10 und dem Außenumfang 13 der Profilhülse und damit die Festigkeit der Profilhülse 4 erhöht.

Die Teilung von Wälzkörperlaufbahnen 6 und Profilnuten 10 wird - wie in dem Ausgestaltungsbeispiel gezeigt - auf äquidistante Winkel ausgelegt, so dass den Wälzkörperlaufbahnen 6 und den Profilnuten 10 jeweils gleiche Winkelsegmente wie im gezeigten Beispiel von jeweils sechs Wälzkörperlaufbahnen 6 und Profilnuten 10 in Höhe von 30° zur Verfügung stehen. In weiteren Ausgestaltungsbeispielen kann die Verteilung der Wälzkörperlaufbahnen und Profilnuten über den Umfang in nicht äquidistanten Winkeln erfolgen. Zur Erhöhung der Materialeinsparung in den Profilnuten 10 sind diese bezüglich ihrer Breite 14 im Bereich des Innenumfangs 16 der Profilhülse 4 breiter als die Breite 15 der Wälzkörperlaufbahnen 6 ausgelegt. Durch die daraus resultierende wannenförmige Form des Querschnitts der Profilnuten 10 ist die Querschnittsfläche der Profilnuten 10 größer als die Querschnittsfläche der Wälzkörperlaufbahnen 6, so dass - verglichen mit zusätzlichen, mit den Wälzkörperlaufbahnen identischen oder auch geringfügig radial erweiterten als Profilnuten ausgebildeten Vertiefungen - mehrere Vorteile resultieren. Beispielsweise ist die Materialeinsparung größer, eine Fehlpositionierung während der Montage ist ausgeschlossen und infolge einer höheren Materialanhäufung im Bereich der Schultern 17 der Wälzkörperlaufbahnen erhöht die Festigkeit dieser das übertragbare Drehmoment der Verschiebeeinheit 1.

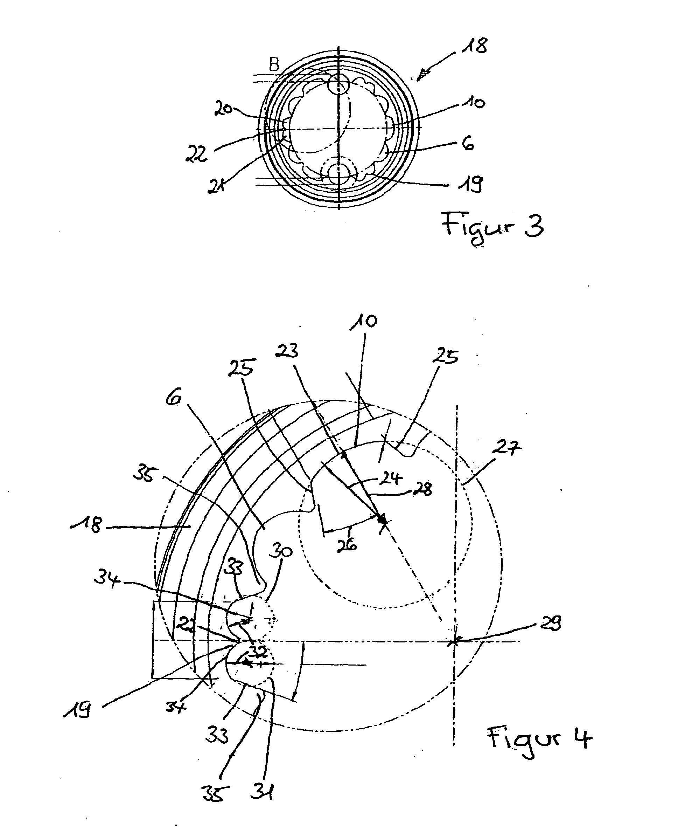

Figur 3 zeigt eine erfindungsgemäße Ausgestaltung der Profilhülse 4 der Figuren 1 und 2. Die hier im Querschnitt dargestellte Profilhülse 18 weist neben den identischen Wälzkörperlaufbahnen 6 und Profilnuten 10 eine geänderte Form von Profilnuten 19 auf, die sich mit den Profilnuten 10 abwechseln. Es versteht sich, dass die Profilnuten 10 auch komplett durch die Profilnuten 19 ausgetauscht werden können. Die Profilnuten 19 werden aus zwei im Querschnitt kreissegmentförmigen Teilflächen 20, 21 unter Ausbildung eine Erhebung 22 gebildet. Zur näheren Erläuterung wird das Detail B nachfolgend unter Figur 4 erläutert.

Figur 4 zeigt das Detail B der Figur 3 mit der Profilhülse 18, mit der Wälzkörperlaufbahn 6 und jeweils einer benachbarten Proflinut 10, 19. Die Profilnut 10 ist aus einem mehrteiligen Profil geometrischer Grundformen gebildet. Dabei ist der Boden 23 aus einem Kreissegment gebildet, dessen zugrunde liegender Kreis einen Radius 24 größer als der Radius der Wälzkörper 9 (Figuren 1 und 2) ist. Der Boden 23 wird an beiden Seiten durch Flanken 25 begrenzt, die in einem vorgegebenen Winkel 26 zu der durch den Mittelpunkt des Kreises 27 geführten Mittelsenkrechten 28 definiert ist und beispielsweise zwischen 15° und 25°, vorzugsweise 20° beträgt. Der Radius 24 beträgt vorzugsweise 2-10 mm. Weiterhin kann vorteilhaft sein, wenn die Mittelsenkrechte 28 neben dem Mittelpunkt des Kreises 27 auch durch die Drehachse 29 der Profilhülse 18 führt.

Der Querschnitt der Profilnut 19 wird durch zwei Kreise 30, 31 mit dem Radius 32 gebildet, die voneinander so beabstandet sind, dass sich deren Umfänge berühren und die Erhebung 22 ausgehend vom Grund der Profilnut bilden. In Umfangsrichtung werden die durch die Kreise 30, 31 gebildeten Kreissegmente 34 durch den Flanken 25 der Profilnut 10 entsprechende Flanken 33 begrenzt. Durch die Begrenzung der Kreissegmente 34 mittels der Flanken 33 wird im Bereich der Schultern 35 der Wälzkörperlaufbahnen 6 Material angehäuft, wodurch diese verstärkt werden.

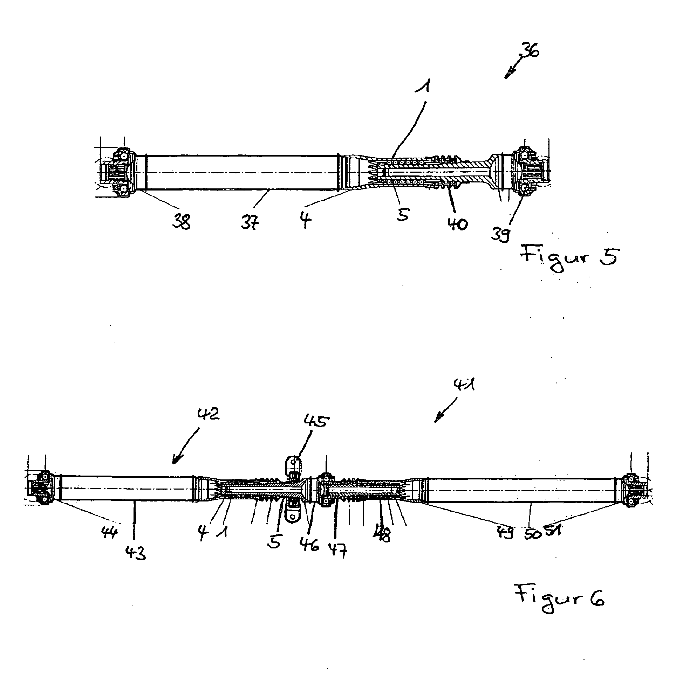

Figur 5 zeigt eine Antriebswelle 36 mit der in den Figuren 1 bis 4 näher erläuterten Verschiebeeinheit 1. Die Profilhülse 4 ist mit einem rohrförmigen Wellenteil 37 fest verbunden, beispielsweise verschweißt. Das Wellenteil 37 trägt an dem der Verschiebeeinheit 4 abgewandten Ende ein Gelenk 38 zum Ausgleich eines Verschwenkwinkels des Wellenteils 37 gegenüber einem nicht dargestellten, das Gelenk 38 antreibenden Antriebsbauteil. Der Profilzapfen 5 ist an einem Ende radial aufgeweitet und nimmt beispielsweise das Gelenkaußenteil eines weiteren Gelenkes 39 zum Ausgleich eines Verschwenkwinkels auf. Zwischen Profilhülse 4 und Profilzapfen 5 ist ein Faltenbalg 40 zum Schutz des Lagers der Verschiebeeinheit vorgesehen.

Figur 6 zeigt eine zweiteilige Antriebswelle 41, beispielsweise als Längswelle mit einem ersten Wellenteil 42 mit einer ersten Verschiebeeinheit 1, deren Profilhülse 4 mit einem Rohrteil 43 fest verbunden ist, das wiederum ein Gelenk 44 aufweist, und dessen Profilzapfen 5 verdrehbar und begrenzt verschwenkbar an einer gehäusefesten Halterung 45 aufgenommen ist und ein Gelenk 46 aufweist, das drehfest auf dem Profilzapfen 47 der zweiten Verschiebeeinheit 48 aufgenommen ist. Die Profilhülse 49 ist mit einem Rohrteil 50 verbunden, das am anderen Ende wiederum ein Gelenk 51 aufweist. Es versteht sich, dass eine oder beide Verschiebeeinheiten 1, 48 jeweils unter Vertauschung von Profilhülse 4, 48 und Profilzapfen 5, 49 mit den Rohrteilen 43, 50 beziehungsweise dem Gelenk 46 verbunden sind. Die Gelenke 38, 39 der Figur 5 und die Gelenke 44, 46, 51 können als Gegenbahngleichlaufgelenke gebildet sein.

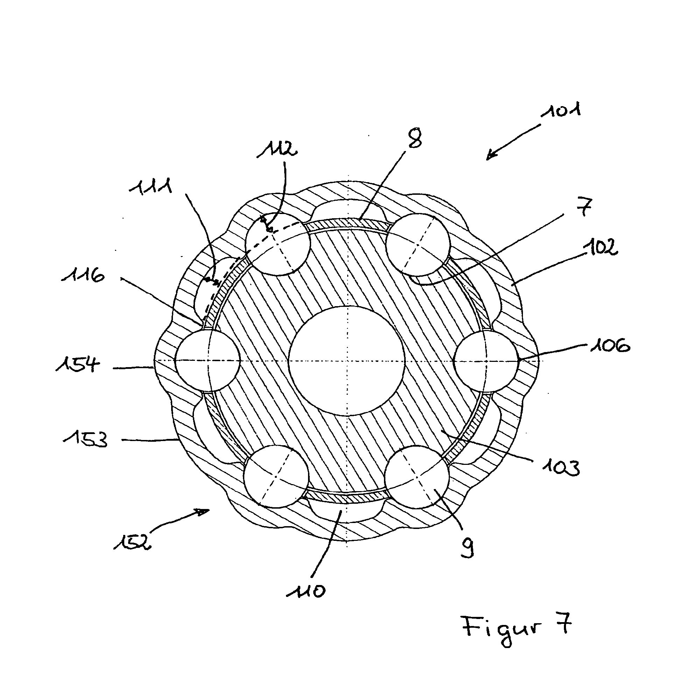

Figur 7 zeigt eine Verschiebeeinheit 101, die der in den Figuren 1 bis 4 gezeigten Verschiebeeinheit 1 ähnlich ist und in gleicher Weise in den Wellen der Figuren 5 und 6 verwendet werden kann. In Abänderung zu der Verschiebeeinheit 1 der Figuren 1 bis 4 kann die Verschiebeeinheit 101 in weiteren Ausführungsbeispielen ohne die Profilnuten 10, 19 ausgestaltet sein.

Die Verschiebeeinheit 101 ist aus einem hülsenförmigen Antriebsbauteil 102 und einem in dieser mittels der Wälzkörper 9 axial verlagerbar und in Umfangsrichtung fest gelagerten Antriebsbauteil 103 gebildet. In den Antriebsbauteilen 102, 103 sind zur Aufnahme der Wälzkörper 9 jeweils mehrere, über den Umfang dieser verteilte Wälzkörperlaufbahnen 7, 106 eingebracht, die jeweils mehrere, axial zueinander mittels des Wälzlagerkäfigs 8 beabstandete Wälzkörper 9 aufnehmen.

Der Außenumfang des hülsenförmigen Antriebsteils 102 weist eine Außenkontur 152 auf, die durch zumindest eine sich radial gegenüber dem Außenumfang 153 des Antriebsbauteils 102 erstreckende Erhebung 154 gebildet ist, die sich vorteilhafterweise in axiale Richtung des Antriebsbauteils 102 erstreckt. In dem gezeigten Ausführungsbeispiel sind die über den Umfang verteilten radialen Erhebungen 154 so gebildet, dass diese über den Umfang betrachtet radial außerhalb der Wälzkörperlaufbahnen 106 angeordnet sind. In vorteilhafter Weise werden die radialen Erhebungen 154 durch einen Formprozess gebildet, wobei zum Zwecke einer Materialeinsparung die Wälzkörperlaufbahnen 106 durch Materialverdrängung nach radial außen gebildet werden und damit die Erhebungen 154 gebildet werden.

In dem in Figur 7 gezeigten Ausführungsbeispiel ist weiterhin eine Variante mit in den Innenumfang 116 des Antriebsbauteils 102 eingebrachten Profilnuten 110 gezeigt, die in Umfangsrichtung betrachtet mit den Wälzkörperlaufbahnen 106 abwechseln und eine geringere Profiltiefe 111 aufweisen als die Profiltiefen 112 der Wälzkörperlaufbahnen. In besonders vorteilhafter Weise können dadurch die Maxima der Profiltiefen 111, 112 auf im Wesentlichen demselben Umfang beziehungsweise Durchmesser angeordnet werden, ohne dass dies zu einer weiteren radialen Ausbuchtung des Außenumfangs 153 des Antriebsbauteils 102 führt und damit eine besonders stabile und gewichtssparende Variante einer Verschiebeeinheit 101 vorgeschlagen werden kann. Besonders vorteilhaft ist dabei eine im Wesentlichen gleich starke Materialstärke an den radial äußeren Bereichen der Profilnuten 110 und Wälzkörperlaufbahnen 106, was insbesondere in einem nachfolgenden Härteprozess zu besonders vorteilhaften Ergebnissen führen kann.

## Patentansprüche

1. Verschiebeeinheit (1, 101) zur axial begrenzten Verlagerung zumindest zweier aufeinander gelagerter Antriebsbauteile (2, 3) einer Antriebswelle,
mit zwei aufeinander gelagerten Antriebsbauteilen (2, 3),
wobei ein Antriebsbauteil (2), das durch eine Profilhülse (4, 102) gebildet ist, mit an dessen Innenumfang über den Umfang verteilten, längs des Antriebsbauteils (2) parallel zueinander verlaufenden Wälzkörperlaufbahnen (6) und das weitere Antriebsbauteil (3), das durch einen Profilzapfen (5) gebildet ist, mit am Außenumfang über den Umfang verteilten, längs des Antriebsbauteils (3) parallel zueinander verlaufenden Wälzkörperlaufbahnen (7) gebildet ist
und jeweils mehrere axial beabstandete Wälzkörper (9) in jeder der Wälzkörperlaufbahnen (6, 7) untergebracht sind,
wobei zwischen zumindest zwei Wälzkörperlaufbahnen (6, 7) eine Profilnut (19) mit zur Profiltiefe der Wälzkörperlaufbahnen (6,7) unterschiedlicher Profiltiefe eingebracht ist, und
wobei die Profilnut (19) im Querschnitt aus zwei zueinander beabstandeten Kreissegmenten (34) gebildet ist, welche eine Erhebung (22) bilden,
**dadurch gekennzeichnet,**
**dass** die Mittelpunkte der die Kreissegmente (34) bildenden Kreise (30, 31) auf einem
Umfang mit größerem Radius als der Innenumfang der Profilhülse (4) beziehungsweise auf einem Umfang mit kleinerem Radius als der Außenumfang des Profilzapfens (5) angeordnet sind.

2. Verschiebeeinheit (1, 101) nach Anspruch 1, **dadurch gekennzeichnet, dass** die Profilnut (19) eine geringere Profiltiefe als die Wälzkörperlaufbahnen (6, 7) aufweist.

3. Verschiebeeinheit (1, 101) nach Anspruch 1 oder 2, **dadurch gekennzeichnet, dass** sich Profilnuten (19) und Wälzkörperlaufbahnen (6) über den Umfang eines Antriebsbauteils (4) abwechseln.

4. Verschiebeeinheit (1, 101) nach Anspruch 3, **dadurch gekennzeichnet, dass** die Teilung von Profilnuten (19) und Wälzkörperlaufbahnen (6, 7) über den Umfang identisch ist.

5. Verschiebeeinheit (1, 101) nach einem der Ansprüche 1 bis 4, **dadurch gekennzeichnet, dass** das hülsenförmige Antriebsbauteil (102) eine nicht runde Außenkontur (152) aufweist.

6. Verschiebeeinheit (1, 101) nach Anspruch 5, **dadurch gekennzeichnet, dass** die Außenkontur (152) durch zumindest eine am Außenumfang (153) radial gegenüber diesem radial erhabene Erhebung (154) gebildet ist.

7. Verschiebeeinheit (1, 101) nach Anspruch 6, **dadurch gekennzeichnet, dass** das hülsenförmige Antriebsbauteil (102) an dessen Innenumfang über den Umfang verteilte, längs des Antriebsbauteils (102) parallel zueinander verlaufende Wälzkörperlaufbahnen (106) aufweist, an deren Außenumfang sich radial die zumindest eine radiale Erhebung (154) anschließt.

## Claims

1. A displacement unit (1, 101) for the axially limited displacement of at least two drive components (2, 3) of a drive shaft mounted on one another, with two drive components (2, 3) mounted on one another,
whereby one drive component (2), which is formed by a profiled sleeve (4, 102), is formed with rolling body raceways (6) distributed on its inner periphery around the periphery and extending along the drive component (2) parallel to one another, and a further drive component, which is formed by a profiled journal (5), is formed with rolling body raceways (7) distributed on its outer periphery around the periphery and extending along the drive component (3) parallel to one another, and a plurality of axially spaced rolling bodies (9) is accommodated in each of the rolling body raceways (6, 7),
whereby a profiled groove (19) with a profile depth different from the profile depth of the rolling body raceways (6, 7) is formed between at least two rolling body raceways (6, 7), and the profile groove (19) has a cross-section formed from two mutually spaced circular segments (34), which forms an elevation (22),
**characterized by** the mid-points of the circles (30, 31) forming the circular segments (34) being arranged on a periphery with a larger radius than the inner periphery of the profiled sleeve (4) or on a periphery with a smaller radius than the outer periphery of the profiled journal (5).

2. Displacement unit (1, 101) in accordance with claim 1, **characterized by** the profiled groove (19) having a lower profile depth than the rolling body raceways (6, 7).

3. Displacement unit (1, 101) in accordance with claims 1 or 2, **characterized by** the profiled grooves (19) and rolling body raceways (6) alternating around the periphery of a drive component (4).

4. Displacement unit (1, 101) in accordance with claim 3, **characterized by** the distribution of profiled grooves (19) and rolling body raceways (6, 7) over the periphery being identical.

5. Displacement unit (1, 101) in accordance with one of the claims 1 to 4, **characterized by** the sleeve-shaped drive component having a non-circular outer contour (152).

6. Displacement unit (1, 101) in accordance with claim 5, **characterized by** the outer contour (152) being formed by at least one elevation (154) on the outer periphery (153) that is raised radially relative to the remainder of the outer periphery.

7. Displacement unit (1, 101) in accordance with claim 6, **characterized by** the sleeve-shaped drive component (102) having rolling body raceways (106) distributed on its inner periphery around the periphery and extending along the drive component (102) parallel to one another, with the at least one radial elevation (154) adjoining the outer periphery of said sleeve-shaped drive component.

## Revendications

1. Unité de translation (1, 101) pour le déplacement axialement limité d'au moins deux éléments d'entraînement (2, 3) d'un arbre d'entraînement qui sont montés l'un sur l'autre,
avec deux éléments d'entraînement (2, 3) montés l'un sur l'autre,
sachant qu'un élément d'entraînement (2), qui est formé par un manchon profilé (4, 102), est pourvu sur sa circonférence intérieure de pistes de roulement (6) pour corps de roulement réparties sur la circonférence et s'étendant parallèlement entre elles le long de l'élément d'entraînement (2), et l'autre élément d'entraînement (3), qui est formé par un tourillon profilé (5), est pourvu sur la circonférence extérieure de pistes de roulement (7) pour corps de roulement réparties sur la circonférence et s'étendant parallèlement entre elles le long de l'élément d'entraînement (3),
et que plusieurs corps de roulement axialement distants (9) sont respectivement logés dans chacune des pistes de roulement (6, 7) pour corps de roulement,
sachant qu'une rainure profilée (19), ayant une profondeur de profil différente de la profondeur de profil des pistes de roulement (6, 7) pour corps de roulement, est pratiquée entre au moins deux pistes de roulement (6, 7) pour corps de roulement,
et sachant que la rainure profilée (19) est formée en coupe transversale de deux segments de cercle mutuellement distants (34), qui forment un bossage (22),
**caractérisée en ce que** les centres des cercles (30, 31) formant les segments de cercle (34) sont respectivement disposés sur une circonférence de plus grand rayon que la circonférence intérieure du manchon profilé (4) et sur une circonférence de plus petit rayon que la circonférence extérieure du tourillon profilé (5).

2. Unité de translation (1, 101) selon la revendication 1, **caractérisée en ce que** la rainure profilée (19) présente une plus petite profondeur de profil que les pistes de roulement (6, 7) pour corps de roulement

3. Unité de translation (1, 101) selon la revendication 1 ou 2, **caractérisée en ce que** des rainures profilées (19) et des pistes de roulement (6) pour corps de roulement alternent sur la circonférence d'un élément d'entraînement (4).

4. Unité de translation (1, 101) selon la revendication 3, **caractérisée en ce que** la cote d'écartement des rainures profilées (19) et des pistes de roulement (6, 7) pour corps de roulement sur la circonférence est identique.

5. Unité de translation (1, 101) selon l'une des revendications 1 à 4, **caractérisée en ce que** l'élément profilé en forme de manchon (102) présente un contour extérieur non rond (152).

6. Unité de translation (1, 101) selon la revendication 5, **caractérisée en ce que** le contour extérieur (152) est formé par au moins un bossage (154) saillant radialement sur la circonférence extérieure (153) par rapport à celle-ci.

7. Unité de translation (1, 101) selon la revendication 6, **caractérisée en ce que** l'élément profilé en forme de manchon (102) présente sur sa circonférence intérieure des pistes de roulement (106) pour corps de roulement réparties sur la circonférence et s'étendant parallèlement entre elles le long de l'élément d'entraînement (102), à la circonférence extérieure desquelles se raccorde radialement le bossage radial au moins unique (154).
